Europäisches Patentamt

European Patent Office

Office européen des brevets

(11) Veröffentlichungsnummer : **0 011 597**
**B1**

(12) **EUROPÄISCHE PATENTSCHRIFT**

(45) Veröffentlichungstag der Patentschrift :
13.10.82

(51) Int. Cl.³ : **C 03 C 11/00**

(21) Anmeldenummer : **79810116.8**

(22) Anmeldetag : **05.10.79**

(54) Blähmittel zur Erzeugung von Schaumglas aus Glasmehl und Verfahren zu dessen Herstellung.

(30) Priorität : 06.10.78 CH 10441/78

(43) Veröffentlichungstag der Anmeldung :
28.05.80 (Patentblatt 80/11)

(45) Bekanntmachung des Hinweises auf die Patenterteilung : 13.10.82 Patentblatt 82/41

(84) Benannte Vertragsstaaten :
AT BE CH DE FR GB IT LU NL SE

(56) Entgegenhaltungen :
CH A 426 601
CH A 502 964
CH A 539 004
DE A 2 012 856
FR A 1 556 202
US A 3 321 414

(73) Patentinhaber : **Milicell AG**
**Brünigstrasse 81**
**CH-6060 Sarnen (CH)**

(72) Erfinder : **Vieli, Otto Anton**
**Casa Vieli**
**CH-7499 Rhäzüns (CH)**

(74) Vertreter : **Brühwiler, Hans et al**
**Brühwiler, Meier & Co. Patentanwälte VSP Löwen-**
**strasse 1 Postfach 996**
**CH-8021 Zürich (CH)**

Imprimerie Jouve, 18, rue St-Denis, 75001 Paris, France

Blähmittel zur Erzeugung von Schaumglas aus Glasmehl und Verfahren zu dessen Herstellung

Die Erfindung betrifft ein Blähmittel zur Erzeugung von Schaumglas aus Glasmehl sowie ein Verfahren zu dessen Herstellung.

Es ist bereits ein Verfahren bekannt (vgl. CH-A 426 601 und 473 741 und US-A 3 321 414), um aus Glasmehl unter Zusatz eines Blähmittels, welches bei höheren Temperaturen Gas abspaltet, im Flachbett- oder Drehrohofen bei 700 bis 900 °C zu Schaumglas-Granulat oder Schaumglas-Formkörpern mit vorwiegend geschlossenen Zellen zu blähen. Als Blähmittel wird dabei u.a. eine wässrige Lösung von Wasserglas und einer organischen Substanz, wie Glycerin, eingesetzt. Dieses Blähmittel weist den Nachteil auf, dass die Gasabspaltung bereits bei zu niedriger Temperatur und zu ungleichmässig erfolgt, so dass die Gashohlräume, welche den porigen Aufbau des Schaumglases erzeugen, in zu unterschiedlichen Grössen anfallen. Es bilden sich dabei Makroporen, in deren Wänden Mikroporen eingeschlossen sind ; daraus resultieren Nachteile bezüglich Festigkeit und Wasseraufnahme des erhaltenen Schaumglases.

Weiter ist auch ein Verfahren bekannt (vgl. FR-A 1 556 202), um aus silikathaltigen Rohstoffen durch Blähen geschäumte Steine zu erzeugen, welche als Ersatz für Glasschaum dienen sollen. Als Blähmittel werden u.a. Gemische verwendet, welche entweder a) Natriumsilikat, Wasser und Glycerin ; oder b) Gasruss, Natriumsilikat und einen Bentonit enthalten. Derartige Blähmittel sind für die Herstellung von Glasschaum nicht verwendbar, da sie zu Erzeugnissen mit offenen Zellen, und im Fall b) darüberhinaus von dunkelgrauer bis schwarzer Farbe, führen.

Weiter ist auch bereits ein Verfahren bekannt (vgl. Technological Digests, Band 8, Nr. 5, Mai 1963, Seite 43), um Schaumglas zu erzeugen, indem man Glasmehl mit Bentonit und einem Alkalisilikat vermischt. In dem Gemisch setzt das Alkalisilikat später den Schmelzpunkt des Glases herab und wirkt auch als Trocknungsmittel. Zur Stabilisierung der Trocknung werden weiter Dextrin und Sulfitablauge, zur Herabsetzung der Oberflächenspannung ausserdem Saponin, Kohlenwasserstoffe oder Fettalkohole zugegeben. Danach wird das gebildete Gemisch mechanisch mittels Wasser oder Gas geschäumt ; der erhaltene Glasschaum wird bei 110 °C getrocknet und anschliessend zuerst in Formen, dann freistehend auf 740 bis 780 °C erhitzt. Im Gegensatz zu dem eingangs beschriebenen Verfahren wird eine Schäumung hier nicht dadurch erzielt, dass ein Blähmittel, welches beim Erhitzen Gas abspaltet, eingesetzt wird, sondern dass die Glaspulvermischung mechanisch geschäumt und anschliessend unter Erhaltung der Schaumstruktur gesintert wird.

Dieses Verfahren führt notgedrungen zu einer sehr groben Schaumstruktur und bedingt einen weitauf grösseren Arbeitsaufwand als die eingangs erwähnten Verfahren.

Durch Versuche wurde nachgewiesen, dass bei gleichem spezifischen Gewicht die Anzahl Poren pro Volumeneinheit des Schaumglases für seine physikalischen Eigenschaften, insbesondere seine Festigkeit, bestimmend sind. Letztere steigt praktisch proportional mit der Porenzahl pro Volumeneinheit an.

Aufgabe der Erfindung ist es nun, ein Blähmittel für die eingangs erwähnte Verwendung zu schaffen, bei welchem die Gasabspaltung erst bei der Sintertemperatur des Glases und dann in extrem feiner Verteilung erfolgt, um dadurch die Herstellung eines feinporigen und damit festeren Schaumglases zu gewährleisten.

Das erfindungsgemässe Blähmittel ist dadurch gekennzeichnet, dass es eine haltbare, mit Wasser verdünnbare, kolloidale Dispersion darstellt, welche mindestens aus Wasser, Wasserglas, Glycerin und einem Alkalibentonit, vorzugsweise Alkalibentonit, besteht. Die Menge an Alkalibentonit beträgt zweckmässigerweise 1 bis 10 Gew.-%, bezogen auf das Blähmittel.

Gegenstand der Erfindung ist weiter ein Verfahren zur Herstellung des erfindungsgemässen Blähmittels, welches dadurch gekennzeichnet ist, dass man zunächst einen Alkalibentonit, insbesondere Natriumbentonit, mit Wasser zu einem Brei vermischt und anschliessend diesen Brei mit Wasserglas, weiterem Wasser und dem Glycerin zu einer kolloidalen Dispersion vermischt.

Das erfindungsgemässe Blähmittel weist gegenüber den eingangs erwähnten bekannten Blähmitteln ein ganze Reihe von überraschenden und entscheidenden Vorteilen auf.

Zunächst ist es haltbar und mit Wasser verdünnbar. Dadurch stellt es ein handelsfähiges Produkt dar ; insbesondere kann es als Konzentrat, das vor seiner Verwendung verdünnt werden kann, in den Handel gebracht werden.

Infolge des Gehaltes des Blähmittels an Glycerin erfolgt die Blähung des Glasschaums nicht nur durch den freigegebenen Wasserdampf sondern auch durch die bei der Crackung des Glycerins gebildeten Gasbestandteile.

Die Blähung führt sodann zu einem Schaumglas mit einem äusserst gleichmässigen, feinzelligen Porenaufbau, d.h. es weist bedeutend mehr Poren derselben Grössenordnung auf als die bisher bekannten Schaumgläser. Infolge der Feinporigkeit weist das mittels des beschriebenen Blähmittels hergestellte Schaumglas, bei gleichem spezifischen Gewischt und gleicher Wasserunempfindlichkeit, eine bisher unbekannt hohe Druckfestigkeit auf.

Weiter weist der vorhandene Alkalibentonit-Anteil ein starkes Absorptionsvermögen auf, so dass er den Wasser- und Wasserglas-Anteil in einem gleichmässigen Quellvorgang aufnimmt.

Die erhaltene kolloidale Dispersion bildet bei der Vermischung mit dem Glasmehl eine plastische Masse, die sich leicht granulieren lässt. Da sie das Glasmehl ohne Lunkerbildung bindet, erhält man ein verschleissfestes Rohgranulat. Infolge der plastifizierenden Wirkung des erfindungsgemässen Blähmittels lässt sich auch mit gröberem Glasmehl als bisher noch ein abreibfestes Rohgranulat herstellen. Die Vermengbarkeit des Blähmittels mit dem Glasmehl kann noch verbessert werden, wann man das Blähmittel als Konzentrat einsetzt und während des Vermengens mit dem Glasmehl weiteres Wasser zufügt.

Beim Blähen kommt die Eigenschaft des Alkalibentonites, die absorbierten Wasser- und Wasserglas-Anteile bis zu einer relativ hohen Temperatur eingeschlossen zu halten und sie nach Ueberschreiten der Umwandlungstemperatur während der Blähung des Glasmehles als Gasbestandteile in äusserst feinteiliger Form freizugeben, zur Wirkung.

Das erfindungsgemässe Blähmittel wirkt während der Blähung nicht nur als « Blähmittel » im eigentlichen Sinne des Wortes sondern gleichzeitig auch als Flussmittel. Weiter wirkt es bei der Herstellung von Rohgranulat, welches in der Folge gebläht werden soll, als Bindemittel.

Beispiel 1

Man vermischt in einem Behälter die folgenden Bestandteile in der angegebenen Reihenfolge zu einer kolloidalen Dispersion :

32 Gewichtsteile Wasserglas (38°Bé entsprechend $D_{20}^{20} = 1,35$)
100 Gewichtsteile Wasser
4 Gewichtsteile Glycerin
15 Gewichtsteile Natriumbentonit.

Das so erhaltene Blähmittel stellt eine haltbare, mit Wasser verdünnbare, fliessfähige Paste dar.

Bei seiner Verwendung wird das Blähmittel mit 500 Gewichtsteilen Glasmehl vermischt. Die Mischung wird bei 150 bis 250 °C auf einen Wassergehalt von 1 bis 2 Gewichts-% getrocknet und anschliessend zerrieben.

Das zerriebene blähmittelhaltige Gemisch wird anschliessend in bekannter Weise im Flachbett- oder Drehrohrofen bei 700 bis 900 °C zu Schaumglas gebläht.

Beispiel 2

Man verrührt zunächst 10 Gewichtsteile Natriumbentonit und 60 Gewichtsteile Wasser zu einem Brei. Dann stellt man ein flüssiges Gemisch aus 14 Gewichtsteilen Wasser, 16 Gewichtsteilen Wasserglas (38°Bé entsprechend $D_{20}^{20} = 1,35$) und 4 Gewichtsteilen Glycerin her. Danach wird das flüssige Gemisch zum Brei zugegeben und das Ganze zu einer kolloidalen Paste verarbeitet.

Das so erhaltenen Blähmittel stellt eine haltbare, mit Wasser verdünnbare, kolloidale Dispersion mit einem Natriumbentonit-Gehalt von 9,6 Gew.-% dar.

## Ansprüche

1. Blähmittel zur Erzeugung von Schaumglas mit vorwiegend geschlossenen Zellen aus Glasmehl, dadurch gekennzeichnet, dass es eine haltbare, mit Wasser verdünnbare, kolloidale Dispersion darstellt, welche mindestens aus Wasser, Wasserglas, Glycerin und einem Alkalibentonit besteht.

2. Blähmittel nach Anspruch 1, dadurch gekennzeichnet, dass es als Alkalibentonit Natriumbentonit enthält.

3. Blähmittel nach Anspruch 1, dadurch gekennzeichnet, dass es 1 bis 10 Gewichtsprozent Alkalibentonit enthält.

4. Verfahren zur Herstellung eines Blähmittels nach Anspruch 1, dadurch gekennzeichnet, dass man zunächst einen Alkalibentonit mit Wasser zu einem Brei vermischt und anschliessend diesen brei mit Wasserglas, weiterem Wasser und dem Glycerin zu einer kolloidalen dispersion vermischt.

## Claims

1. Blowing agent for producing foam glass having predominantly closed celles, from pulverized glass, characterized in that it is a stable colloidal dispersion capable of being stored and of being diluted with water, which is composed at least of water, water glass, glycerol, and a alkali bentonite.

2. Blowing agent as claimed in claim 1, characterized in that it contains sodium bentonite as an alkali bentonite.

3. Blowing agent as claimed in claim 1, characterized in that it contains 1 to 10 percent by weight of an alkali bentonite.

4. Process for producing a blowing agent as claimed in claim 1, characterized in that first a slurry is prepared from an alkali bentonite and water, and that thereafter this slurry is mixed with water glass, further water and the glycerol to form a colloidal slurry.

## Revendications

1. Agent de gonflage pour la fabrication de verre-mousse à cellules en majeure partie fermées à partir de poudre de verre, caractérisé en ce qu'il représente une dispersion colloïdale, pouvant être diluée à l'eau et pouvant être conservée et qui consiste au moins en eau, verre soluble, glycérol et en bentonite alcaline.

2. Agent de gonflage selon la revendication 1, caractérisé en ce que la bentonite alcaline qu'il contient est de la bentonite sodique.

3. Agent de gonflage selon la revendication 1, caractérisé en ce qu'il contient 1 à 10 % en poids de bentonite alcaline.

4. Procédé de production d'un agent de gonflage selon la revendication 1, caractérisé en ce qu'il consiste à mélanger tout d'abord une bentonite alcaline avec de l'eau afin de former un magma, puis à mélanger ce magma avec du verre soluble, une quantité supplémentaire d'eau et le glycérol pour former une dispersion colloïdale.